# NEUE EUROPÄISCHE PATENTSCHRIFT

(11) **EP 1 157 184 B2**
(45) Veröffentlichungstag und Bekanntmachung des Hinweises auf die Entscheidung über den Einspruch: **19.11.2008**
(45) Hinweis auf die Patenterteilung: 04.06.2003
(21) Anmeldenummer: 00909296.6
(22) Anmeldetag: 02.03.2000
(51) Int. Cl.: E06B 3/673

(54) **VORRICHTUNG ZUM FÖRDERN VON ISOLIERGLASSCHEIBEN**
DEVICE FOR CONVEYING INSULATING GLASS PANES
DISPOSITIF PERMETTANT DE TRANSPORTER DES VITRES ISOLANTES

(30) Priorität: 05.03.1999 DE 19909638
(43) Veröffentlichungstag der Anmeldung: 28.11.2001
(73) Patentinhaber: Lenhardt Maschinenbau GmbH, D-75242 Neuhausen-Hamberg (DE)
(72) Erfinder: LENHARDT, Karl, D-75378 Bad Liebenzell (DE)
(74) Vertreter: Twelmeier, Ulrich
(86) Internationale Anmeldenummer: PCT/EP2000/001818
(87) Internationale Veröffentlichungsnummer: WO 2000/053879

(56) Entgegenhaltungen:
- EP-A1- 0 225 429
- EP-A1- 0 549 556
- EP-A1- 0 549 648
- DE-A1- 3 038 425
- DE-A1- 4 238 254
- DE-C1- 4 029 669
- DE-U1- 8 027 173
- IT-B- 1 141 769
- US-A- 5 280 832

## Beschreibung

### Technisches Gebiet:

Die Erfindung geht aus von einer Vorrichtung zum Fördern von Isolierglasscheiben mit den im Oberbegriff des Anspruchs 1 angegebenen Merkmalen. Eine solche Vorrichtung ist aus der IT-A-1 141 769 bekannt. Vorrichtungen gemäß der DE 8 027 173 U bzw. der DE-A-3 038 425 finden Verwendung in Fertigungslinien für Isolierglas, und zwar in jenem Bereich, in welchem eine halbfertige, aus zwei einzelnen Glasscheiben unter Zwischenfügen eines mit den Glasscheiben verklebten Abstandhalterrahmens zusammengefügte Isolierglasscheibe gehandhabt wird. Eine solche halbfertige Isolierglasscheibe hat umlaufend eine Randfuge, welche mit einer zunächst pastösen und nachfolgend aushärtenden Verstegelungsmasse gefüllt wird, deren Aufgabe es ist, einen dauerhaften und festen Verbund zwischen den die Isolierglasscheibe bildenden einzelnen Glasscheiben herzustellen und den Innenraum der Isolierglasscheibe gegen ein Eindringen von Feuchtigkeit zu schützen. Als Versiegelungsmasse sind vor allem Thiokole und Polyurethan im Gebrauch.

### Stand der Technik:

Zum Versiegeln der Randfuge von halbfertigen Isolierglasscheiben enthalten die Fertigungslinien eine Versiegelungsstation, in welcher die Isolierglasscheiben durch eine oder mehrere Düsen, welche an den Scheibenrändern entlanggeführt werden, versiegelt werden (DE-C-28 16 437). Die erfindungsgemäße Vorrichtung ist vor allem zur Verwendung in einer solchen Versiegelungsstation vorgesehen.

Die aus dem DE-U-80 27 173 bekannte Vorrichtung hat einen Waagerechtförderer mit zwei synchron angetriebenen, endlosen Ketten, welche parallel zueinander angeordnet sind und einander paarweise gegenüberliegende Auflager sowie Druckbacken tragen. Die Isolierglasscheiben stehen mit ihrem unteren Rand auf den Auflagern, wobei die Auflager die Isolierglasscheiben von der Außenkante her nur teilweise untergreifen, so daß die Randfuge frei bleibt. Die Druckbacken stellen sicher, daß die Isoiierglasscheiben während des Förderns von den Auflagern nicht heruntergleiten und kein Schlupf auftritt. Um verschieden dicke isolierglasscheiben fördern zu können, ist die eine der Förderketten zusammen mit Umlenkzahnrädern, um welche sie herumgeführt ist, im rechten Winkel zur Förderrichtung und zu den Drehachsen der Umlenkzahnräder verschieblich.

Damit die Isolierglasscheiben von dem Waagerechtförderer nicht herunterkippen, ist oberhalb des Waagerechtförderers eine Stützeinrichtung vorgesehen, an welche sich die Isolierglasscheiben anlehnen. Bei der aus dem DE-U-80 27 173 bekannten Vorrichtung ist es eine höhenverstellbare Stützrollenzeile, welche die Isolierglasscheiben nahe bei ihrem oberen Rand unterstützt.

Die Auflager der bekannten Vorrichtung untergreifen die beiden einzelnen Glasscheiben der Isolierglasscheiben von der äußeren Kante her nur teilweise und lassen so die Randfuge und einen an die Randfuge angrenzenden Streifen am unteren Rand der einzelnen Glasscheiben frei. Dadurch soll verhindert werden, daß der Waagerechtförderer etwas von der pastösen Versiegelungsmasse, welche in die Randfuge eingefüllt ist, aufnimmt. Ein Nachteil der bekannten Vorrichtung liegt darin, daß es wegen des Einklemmens der Isolierglasscheiben zwischen den Druckbacken am unteren Rand der Isolierglasscheiben zu Absplitterungen kommen kann, zumal die Kanten der Glasscheiben i. a. nicht glatt, sondem gebrochen sind und deshalb Unregelmäßigkeiten aufweisen. Ein weiterer Nachteil der bekannten Vorrichtung liegt darin, daß eine versiegelte Isolierglasscheibe erst entnommen werden kann, nachdem die durch die Druckbacken ausgeübte Klemmung durch Querverschieben der einen Förderkette gelöst ist; dabei besteht die Gefahr des Abgleitens der Isolierglasscheibe vom Waagerechtförderer.

Einen wesentlichen Fortschritt brachte die aus der EP 0 549 648 B1 bekannte Fördervorrichtung, welche einen Waagerechtförderer mit Auflageflächen hat, auf welchen die Isolierglasscheiben stehend gefördert werden. Die Auflageflächen liegen in der Flucht zweiter Ebenen sind zur Förderrichtung parallel und bilden einen sich nach oben öffnenden Keil. Die Auflageflächen, welche vorzugsweise als Zahnriemen ausgebildet sind, unterstützen die Isolierglasscheiben ausschließlich an den Außenkanten des unteren Randes der die Isolierglasscheibe bildenden beiden Glasscheiben. Durch die keilförmige Anordnung der Auflageflächen neigen die Isolierglasscheiben dazu, sich auf dem Waagerechtförderer selbst zu zentrieren, was für den Fördervorgang vorteilhaft ist. Diese Neigung zur Selbstzentrierung kann dazu führen, daß die beiden Glasscheiben auf den zwischen ihnen liegenden Abstandhalter Druck ausüben. Ist der Abstandhalter hinreichend druckfest, was bei Abstandhaltern, die aus metallischen Hohlprofilen gebildet sind, stets der Fall ist, gibt es damit keinerlei Probleme. Das kann jedoch anders sein bei plastischen, zum Beispiel thermoplastischen Abstandhaltern, die erst unmittelbar vor dem Zusammenbau der Isolierglasscheibe auf eine der Glasscheiben extrudiert werden und in Verbindung mit den Glasscheiben erst einmal erhärien müssen. Bei Verwendung solcher in situ auf eine Glasscheibe extrudierten Abstandhaltern kann der beim Selbstzentrieren auftretende Druck auf den Abstandhalter diesen stauchen und dadurch den Abstand zwischen den beiden Glasscheiben unter den vorgesehenen Sollabstand verringern. Diese Gefahr steigt mit dicker und schwerer werdenden Glasscheiben, insbesondere bei Verbundglasscheiben und Glasscheiben aus Strukturglas, vor allem, wenn diese am Rand eine geschliffene Facette haben, welche das Abdriften auf den geneigten Auflageflächen begünstigt

### Darstellung der Erfindung:

Der vorliegenden Erfindung liegt die Aufgabe zugrunde, für das Fördern von hochkant stehenden Isolierglasscheiben, insbesondere von versiegelten isolierglasscheiben, eine Vorrichtung zu schaffen, welche wie die aus der DE-U-80 27 173 und aus der EP 0 549 548 B1 bekannten Fördervorrichtungen die Randfuge freilaßt und sich insbesondere für Isolierglasscheiben eignet, welche unter Verwendung von plastischen Abstandhaltem und/oder dicken und schweren Glasscheiben gebildet sind. Dabei soll ein Stauchen des Abstandhalters beim Fördervorgang vermieden werden.

Diese Aufgabe wird gelöst durch eine Vorrichtung mit den im Anspruch 1 angegebenen Merkmalen. Vorteilhafte Weiterbildungen der Erfindung sind Gegenstand der Unteransprüche. Der Patentanspruch 13 gibt ein vorteilhaftes Verfahren zum Betreiben der erfindungsgemäßen Vorrichtung an.

Die Erfindung hat wesentliche Vorteile:
◆ Die Breite und Lage des Spaltes zwischen den Auflageflächen an dem hinteren Förderglied (welches der Scheibenlaufebene am nächsten liegt) einerseits und den Auflageflächen am vorderen Förderglied (welches von der Scheibenlaufebene einen größeren Abstand hat) andererseits kann der Breite und Lage der Randfuge zwischen den beiden Glasscheiben einer Isolierglasscheibe eng angepaßt werden. Bei der DE-U-80 27 173 kann der Abstand der Förderglieder lediglich der Dicke der Isolierglasscheibe insgesamt eng angepaßt werden.
◆ Die beiden Glasscheiben der Isolierglasscheibe können über die gesamte Breite ihres unteren Randes, d.h. von der Außenkante bis zur Innenkante der jeweiligen Glasscheibe, unter Freilassen der durch die Innenkante der beiden Glasscheiben begrenzten Randfuge, unterstützt werden. Bei der Vorrichtung gemäß DE-U-80 27 173 konnten die Glasscheiben nur um ein kleines, für dünne, leichte Scheiben und für dicke, schwere Scheiben gleiches Maß von außen her teilweise untergriffen werden. Scheiben, deren Außenkante zu einer Facette geschliffen ist, können damit praktisch gar nicht unterstützt und gefördert werden. Bei der aus der EP 0 549 648 B1 bekannten Vorrichtung werden sowohl dünne, leichte als auch dicke, schwere Glasscheiben nur an ihrer Außenkante unterstützt. Während folglich bei den Fördervorrichtungen nach dem Stand der Technik die spezifische Belastung der Auflageflächen bei dicken und schweren Glasscheiben sehr groß wird und zu beträchtlichem Verschleiß führen kann, nimmt bei der erfindungsgemäßen Fördervorrichtung die spezifische Belastung mit zunehmender Dicke der Glasscheiben nicht zu, so daß die Auflageflächen der Förderglieder viel weniger auf Verschleiß beansprucht sind.
◆ Isolierglasscheiben können auch dann problemlos gefördert werden, wenn eine oder beide Glasscheiben an der Außenkante facettiert sind.
◆ Beim Fördervorgang wird auf den Abstandhalter so gut wie kein Druck ausgeübt.
◆ Die erfindungsgemäße Vorrichtung kann auch für das Fördern von gestuften Isolierglasscheiben verwendet werden. Gestufte Isoliergtasscheiben sind solche, bei denen eine der beiden Glasscheiben größer ist als die andere, so daß sie mindestens längs eines Randes über die andere hinausragt (siehe EP 0 549 556 B1). Ragt die größere Scheibe längs des unteren Randes der Isolierglasscheibe über die kleinere Glasscheibe hinaus, dann kann sie auf der erfindungsgemäßen Fördervorrichtung gefördert werden, wenn wenigstens eines der beiden Förderglieder, vorzugsweise das der Scheibenlaufebene nächstliegende Förderglied, nicht nur quer zur Scheibenlaufebene, sondern auch in der Höhe, zweckmäßigerweise parallel zur Scheibenlaufebene verstellbar ist. Die Höhenverstellbarkeit eines Fördergliedes ist zu diesem Zweck aus der EP 0 549 556 B1 an sich bekannt, jedoch nicht in Kombination mit quer verschieblichen Fördergliedern. Vorzugsweise ist nur eines der Förderglieder in der Höhe verstellbar, nämlich das der Scheibenlaufebene nächstliegende Förderglied. Für das zweite Förderglied ist eine Höhenverstellbarkeit entbehrlich.

Um die Breite und die Lage des Spaltes zwischen den Auflageflächen am hinteren Förderglied einerseits und den Auflageflächen am vorderen Förderglied andererseits an die Breite und Lage der Randfuge einer Isolierglasscheibe eng anpassen zu können, muß man wissen, wie dick die in der Scheibenlaufebene liegende hintere Glasscheibe ist und wie breit die Randfuge ist. Die Breite der Randfuge wird auch als Scheibenzwischenraum oder Luftzwischenraum bezeichnet. Die Dickke der hinteren Glasscheibe und die Breite der Randfuge werden in der Isolierglasfertigungslinie, in welche die erfindungsgemäße Vorrichtung bestimmungsgemäß eingebunden ist, durch Sensoren gemessen, welche mit der Steuereinrichtung der erfindungsgemäßen Vorrichtung verbunden sind, so daß diese die für das Querverschieben der Förderglieder vorgesehenen Stellmotore entsprechend den gemessenen beiden Maßen der Isolierglasscheibe betätigen und die Förderglieder verstellen, bevor die Isolierglasscheibe in die erfindungsgemäße Vorrichtung einläuft.

Die Förderglieder der erfindungsgemäßen Vorrichtung können unterschiedlich gestaltet sein. Es können zwei zueinander parallele, waagerechte Zeilen von synchron angetriebenen Rollen sein, auf welchen die beiden Glasscheiben einer Isolierglasscheibe stehen. Günstiger als Auflageflächen, die am unteren Rand der Isolierglasscheibe abrollen, sind jedoch Auflageflächen, die sich in der waagerechten Förderrichtung erstrecken und mit den Isolierglasscheiben durch die Fördervorrichtung wandern, z.B. eine Folge von waagerechten Auflagern, welche an einer endlosen Kette angebracht sind. Am besten ist es jedoch, als Förderglieder Riemen zu verwenden, deren Obertrum durch einen Träger unterstützt ist. Ein solcher Riemen bietet den Glasscheiben die größtmögliche Aufstandsfläche und kann doch die Randfuge vollständig freilassen. Da es zwischen den Riemen und den Glasscheiben keine Relativbewegung gibt, ist nicht zu befürchten, daß die Isolierglasscheibe im Verlauf des Fördervorganges schräg läuft, wie es z.B. bei einem Rollenförderer möglich wäre. Auf Druckbacken oder Führungsrollen, welche außenseitlich auf die Isolierglasscheibe einwirken, um sie zu führen, und die dabei Druck auch auf den Abstandhalter ausüben, kann erfindungsgemäß verzichtet werden.

Vorteilhaft ist die Verwendung einer Mitnahmevorrichtung in Gestalt eines Saugförderbandes in der Stützeinrichtung, welche sich oberhalb des Waagerechtförderers parallel zu diesem erstreckt und synchron mit den Fördergliedern antreibbar ist. Ein solches Saugförderband, welches z.B. in der EP 0 549 548 B1 offenbart ist, und dort die Aufgabe hat, die Isolierglasscheibe zuverlässig über eine Lücke im Waagerechtförderer hinwegzubewegen, nämlich über eine Lücke, in welcher sich eine Versiegelungsdüse befindet, welche die Versiegelungsmasse in die Randfuge der Isolierglasscheibe einfüllt, ein solches Saugförderband ist im Rahmen der vorliegenden Erfindung ein geeignetes und vorteilhaftes Mittel, um die Isolierglasscheibe sicher in der Scheibenlaufebene zu halten, ohne daß dadurch irgend ein Druck auf den Abstandhalter ausgeübt würde.

Der Träger hat vorzugsweise eine waagerecht und im wesentlichen rechtwinklig zur Scheibenlaufebene ausgerichtete Oberseite, auf welcher das Obertrum des Riemens gleitet. Um einen guten Geradeauslauf des Riemens zu gewährleisten, sind zweckmäßigerweise Führungsmittel vorgesehen, welche sich in der vorgegebenen Förderrichtung erstrecken, z.B. eine flache Nut in der Oberseite des Trägers, in welcher der Riemen seitlich geführt läuft.

Will man die Reibung zwischen dem Riemen und seinem Träger vermindern, dann gibt es die Möglichkeit, im Träger eine dichte Folge von achsparallel und höhengleich angeordneten Rollen vorzusehen, welche das Obertrum des Riemens unterstützen.

Um mit den Riemen schlupffrei fördern zu können, sind es vorzugsweise Zahnriemen, die ihre Zähne an der Unterseite haben und um Zahnräder herumgeführt sind, von denen wenigstens eines angetrieben ist.

### Wege zur Ausführung der Erfindung:

Die beigefügten schematischen Zeichnungen zeigen:
- Figur 1: zeigt einen senkrecht zur Förderrichtung gelegten Teilschnitt durch eine Vorrichtung zum Fördern von Isolierglasscheiben mit einer Luftkissenwand für die seitliche Abstützung der Isolierglasscheiben, wobei das Förderglied 7 die Randfuge noch nicht freiläßt.
- Figur 2: zeigt eine erfindungsgemäße Vorrichtung in einer Darstellung wie in Figur 1,
- Figur 3: zeigt eine nicht erfindungsgemäß eingestellte Vorrichtung wie in Figur 1 oder Figur 2 mit Fördergliedern, die einander so weit wie möglich angenähert sind, und
- Figur 4: zeigt in einer Darstellung wie in Figur 1 die Stellung der Förderglieder beim Fördern von gestuften Scheiben, wobei das Förderglied 8 die Randfuge nicht freiläßt.

In den Zeichnungen sind gleiche und einander entsprechende Teile mit übereinstimmenden Bezugszahlen bezeichnet.

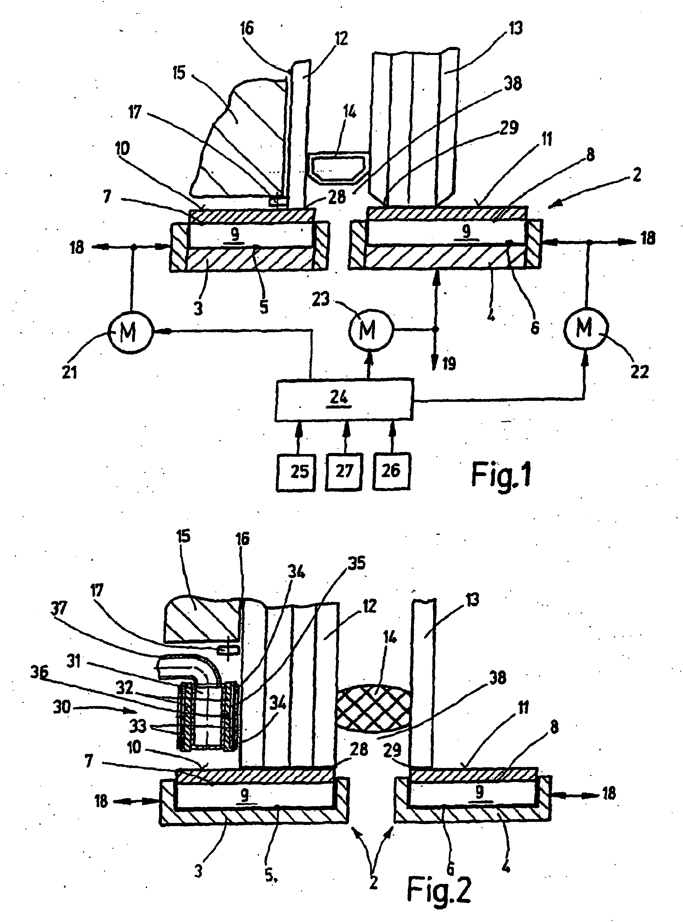

Die in den Figuren dargestellte Vorrichtung hat ein Gestell, an welchem ein Waagerechtförderer 2 angebracht ist. Der Waagerechtförderer umfaßt zwei sich in Förderrichtung erstreckende Träger 3 und 4, auf deren Oberseite eine Nut 5, 6 ausgebildet ist, in welcher ein endloser Zahnriemen 7, 8 läuft, dessen Zähne 9 in der Nut 5, 6 liegen und dessen ungezahnte Oberseite 10, 11 als Auflagefläche für eine Isolierglasscheibe dient, welche aus zwei einzelnen Glasscheiben 12 und 13 gebildet ist, welche mittels eines Abstandhalterrahmens 14 miteinander verklebt sind. Im Ausführungsbeispiel gemäß Figur 1 ist der Abstandhalterrahmen 14 aus einem metallischen Hohlprofil gebildet, dessen den Glasscheiben 12, 13 zugewandte Seitenflächen mit einer Klebemasse beschichtet sind.

Die Zahnriemen 7 und 8 sind synchron antreibbar und zu diesem Zweck um Zahnräder herumgeführt, von denen mindestens jeweils eines angetrieben ist.

Oberhalb des Trägers 3 mit seinem Zahnriemen 7 befindet sich eine als Luftkissenwand ausgebildete Stützwand 15, welche sich parallel zur Förderrichtung erstreckt und um einige Grad aus der Lotrechten nach hinten geneigt ist. Die Achsen der die Zahnriemen 5 und 6 umlenkenden und antreibenden Zahnräder verlaufen im rechten Winkel zur Luftkissenwand 15. Entsprechendes gilt für das Obertrum der Zahnriemen 5 und 6.

Die Vorderseite der Luftkissenwand 15, an welche die Isolierglasscheibe angelehnt wird, definiert zusammen mit freilaufenden Stützrollen 17, die am unteren Rand der Luftkissenwand 15 angebracht sind und mit ihrer Lauffläche ein wenig über deren Vorderseite vorstehen, eine Scheibenlaufebene 16, in welcher die Auβenseite der hinteren Glasscheibe 12 beim Fördern liegt.

Die beiden Träger 3 und 4 sind unabhängig voneinander durch elektrische Stellmotoren 21, 22 senkrecht zur Vorderseite der Stützwand 15 und damit im wesentlichen senkrecht zur Scheibenlaufebene 16 verschiebbar, wie durch waagerechte Doppelpfeile 18 angedeutet. Wenigstens einer der Träger, in Figur 1 ist es der Träger 4, ist darüberhinaus auch parallel zur Vorderseite der Stützwand 15 und damit im wesentlichen parallel zur Scheibenlaufebene 16 mittels eines elektrischen Stellantriebs 23 in der Höhe verstellbar, in Figur 1 angedeutet durch den Doppelpfeil 19.

Die Stellmotoren 21, 22 für das annähernd waagerecht erfolgende Verschieben der Träger 3, 4 und der Stellantrieb 23 für die Höhenverstellung des Trägers 4 werden durch ein Steuergerät 24 gesteuert, welches seinerseits Signale von Sensoren 25, 26, 27 empfängt, von denen einer, zum Beispiel der Sensor 25, die Dikke der hinteren Glasscheibe 12, ein anderer, zum Beispiel der Sensor 26, den Abstand zwischen den Glasscheiben 12 und 13 und einer, zum Beispiel der Sensor 27, die Höhe der Glasscheiben 12 und 13 mißt. Aus den Meßsignalen der Sensoren 25, 26 und 27 bildet das Steuergerät 24 Stellsignate für die Stellmotor 21 und 22 für den Stellantrieb 23. Demgemäß verschiebt der Stellmotoren 21 den Träger 3 so, daß der Zahnriemen 7 mit seinem über die Stützwand 15 vorstehenden Rand mit der Innenkante 28 der hinteren Glasscheibe 12 bündig ist. Der Stellmotor 22 verschiebt den Träger 4 so, daß der der Stützwand 15 zugewandte Rand des Zahnriemens 8 vom gegenüberliegenden Rand des Zahnriemens 7 einen mit dem Abstand der Glasscheiben 12 und 13 übereinstimmenden Abstand hat oder einen etwas größeren Abstand, letzteres insbesondere dann, wenn die dickere Glasscheibe 13 durch Facettierung des unteren Randes dort eine zurückspringende Kante 29 hat, auf welche der Rand des Zahnriemens 8 dann vorzugweise eingestellt wird. Aus der Höhenmessung des Sensors 27 kann das Steuergerät 24 ableiten, ob eine gestufte Isolierglasscheibe kommt, und wenn ja, wie hoch die Stufe ist. Um die Höhe dieser Stufe versetzt der Stellantrieb 23 dann den Träger 4. Bei gestuften Isolierglasscheiben aus unterschiedlich dicken Glasscheiben ist die dickere Glasscheibe im allgemeinen die größere. In diesem Fall würde der Stellantrieb 23 den Träger 4 nach unten versetzen.

Das in Figur 2 dargestellte Ausführungsbeispiel unterscheidet sich von dem in Figur 1 dargestellten Ausführungsbeispiel darin, daß die Isoliergtasscheibe statt eines metallischen Abstandhalters 14 einen plastischen Abstandhalter hat und daß in einem Ausschnitt der Stützwand 15 eine Mitnahmevorrichtung 30 vorgesehen ist, welche einen sich parallel zur Förderrichtung erstreckenden hohlen Balken 31 hat, welcher auf seiner Vorderseite und auf seiner Rückseite jeweils eine Führungsschiene 32 trägt, in welcher ein Riemen 33 läuft, aus dessen Vorderseite durch längs verlaufende streifenförmige Erhöhungen 34 und durch sie verbindende, von oben nach unten verlaufende Stege 35 flache, offene Kammern gebildet werden, die durch die Isolierglasscheibe abgedeckt werden können. Diese flachen Kammern stehen über Löcher 36 in dem Riemen 33 und in dem Balken 31 mit dessen Innenraum und dieser über ein Saugrohr 37 mit der Saugseite eines Gebläses in Verbindung, wodurch im Zwischenraum zwischen dem Riemen 33 und der Isolierglasscheibe ein Unterdruck entsteht. Andere für den vorliegenden Zweck verwendbare Saugförderbänder sind in der DE 35 29 892 A und in der EP 0 225 429 C beschrieben.

Durch die Vorderseiten der Mitnahmevorrichtung 30 und der Luftkissenwand 15, welche gemeinsam die Isolierglasscheibe an der Rückseite abstützen, wird in diesem Fall die Scheibenlaufebene 16 definiert.
Die Mitnahmevorrichtung 30 stellt sicher, daß die Isolierglasscheibe mit der Außenseite ihrer hinteren Glasscheibe 12, welche in diesem Fall eine dickere Verbundglasscheibe ist, in der Scheibenlaufebene 16 bleibt; diese Art Führung der Isolierglasscheibe erzeugt keinerlei Druck auf den plastischen Abstandhalter 14.

Um auch gestufte Scheiben fördern zu können, ist in diesem Fall der Träger 3 in der Höhe verstellbar. Im übrigen sind beide Träger 3 und 4 wie im ersten Ausführungsbeispiel annähernd waagerecht verstellbar.

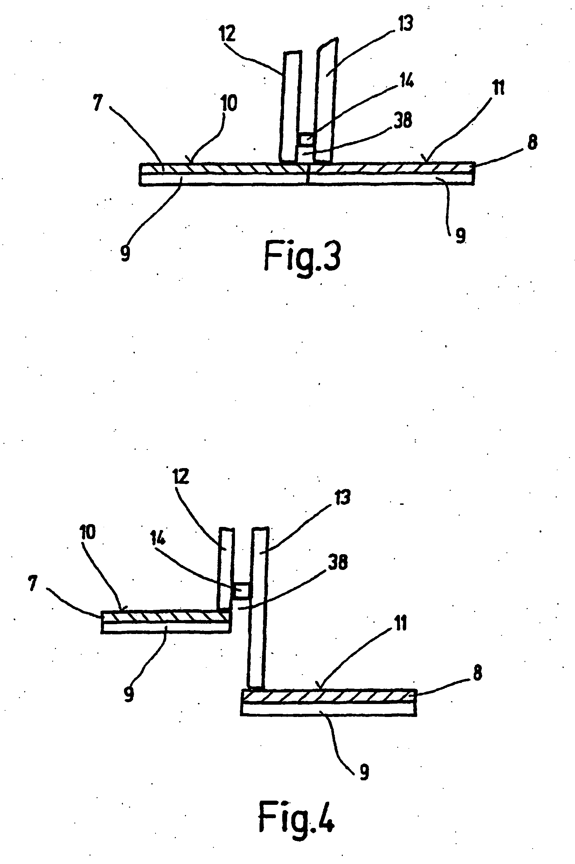

Wenn die untere Randfuge 38 der Isolierglasscheibe keine frische Versiegelungsmasse enthält, müssen die beiden Zahnriemen 7 und 8 die Randfuge 38 nicht frei lassen, sondern dürfen sie überdecken, wie in Figur 3 dargestellt. Die beiden Förderglieder 7 und 8 können dann ihren geringstmöglichen Abstand einnehmen, wie in Figur 3 dargestellt Eine solche Anordnung eignet sich für die Einlaufseite eines Versiegelungsautomaten in einer Isolierglasfertigungslinie. Als Einlaufseite des Versiegeingsautomaten wird der bezüglich der Förderrichtung vor der Versiegelungsdüse des Versiegelungsautomaten liegende Abschnitt des Versiegetungsautomaten bezeichnet. Auf der Auslaufseite des Versiegelungsautomaten, also in seinem bezüglich der Förderrichtung nach der Versiegelungsdüse liegenden Abschnitt, werden die Förderglieder so eingestellt, daß sie die Randfuge 38 freilassen. Auf der Einlaufseite des Versiegelungsautomaten können darüberhinaus die Verstellantriebe 21 und 22 für das annähernd waagerechte Verschieben der Träger 3 und 4 eingespart werden.

Figur 4 zeigt eine Anordnung der Förderglieder 7 und 8 beim Fördern von gestuften Isolierglasscheiben. Für diesen Zweck wurde entweder der Träger 4 abgesenkt (Figur 1) oder der Träger 3 angehoben (Figur 2). Das tieferliegende Förderglied 8 muß in diesem Fall nicht bündig mit der Innenkante der äußeren Glasscheibe 13 abschließen, weil es durch die Abstufung der Isolierglasscheibe ohnehin einen größeren Abstand von der Randfuge 38 hat.

## Patentansprüche

1. Vorrichtung zum Fördern von gegenüber der Lotrechten etwas geneigten Isolierglasscheiben, welche zwischen zwei Glasscheiben (12, 13) eine Randfuge (38) haben, mit einem Waagerechtförderer (2), auf weichem die Isolierglasscheiben stehen können,
und mit einer Stützeinrichtung (15), welche sich oberhalb des Waagerechtförderers (2) parallel zu diesem erstreckt und durch ein oder mehrere Stützelemente, an denen die auf dem Waagerechtförderer (2) stehenden Isolierglasscheiben anliegen können, eine Scheibenlaufebene (16) definiert,
wobei der Waagerechtförderer (2) an zwei zueinander parallelen, synchron antreibbaren Fördergliedem (7,8) Auflageflächen (10, 11) hat, welche im wesentlichen senkrecht zur Scheibenlaufebene (16) ausgerichtet sind, und der Abstand zwischen den Fördergliedern (7, 8) durch Stellmotore (21, 22) veränderlich ist, **dadurch gekennzeichnet, daß** beide Förderglieder (7, 8) unabhängig voneinander quer zur Scheibenlaufebene (16) verlagerbar sind, **daß** für das Verlagem der Förderglieder (7,8) elektrische Stellmotoren (21, 22) vorgesehen sind, denen Sensoren (25,26) zugeordnet sind, welche die Dicke der Glasscheibe (12), welche in der Scheibenlaufebene (16) läuft, und den Abstand der beiden Glasscheiben (12,13) in der Isolierglasscheibe messen können, so daß die Stellmotoren (21,22) die Förderglieder entsprechend den erhaltenen Meßwerten derart verstellen, daß die Breite und Lage des Spaltes zwischen den Auflageflächen (10, 11) der Breite und Lage der Randfuge (38) angepasst werden und die Auflageflächen (10, 11) die Randfuge (38) freilassen.

2. Vorrichtung nach Anspruch 1, **dadurch gekennzeichnet, daß** sich die Auflageflächen (10, 11) in der waagerechten Förderrichtung erstrecken.

3. Vorrichtung nach Anspruch 2, **dadurch gekennzeichnet, daß** die Förderglieder (7, 8) Riemen sind, deren Obertrum durch einen Träger (3, 4) unterstützt ist.

4. Vorrichtung nach Anspruch 3, **dadurch gekennzeichnet, daß** der Träger (3, 4) eine waagerecht und im wesentlichen rechtwinklig zur Scheibenlaufebene (16) ausgerichtete Oberseite hat, auf welcher das Obertrum des Riemens (7, 8) gleitet

5. Vorrichtung nach Anspruch 4, **dadurch gekennzeichnet, daß** der Träger (3,4) Führungsmittel hat, welche die Riemen (7, 8) in Förderrichtung führen.

6. Vorrichtung nach Anspruch 5, **dadurch gekennzeichnet, daß** die Führungsmittel durch eine Nut (5, 6) in der Oberseite des Trägers (3, 4) gebildet sind.

7. Vorrichtung nach Anspruch 3, **dadurch gekennzeichnet, daß** der Träger eine dichte Folge von achsparallel und höhengleich angeordneten Rollen aufweist, welche das Obertrum des Riemens unterstützen.

8. Vorrichtung nach einem der Ansprüche 3 bis 7, **dadurch gekennzeichnet, daß** die Riemen (7, 8) Zahnriemen sind.

9. Vorrichtung nach einem der vorstehenden Ansprüche, **dadurch gekennzelchnet, daß** wenigstens eines der Förderglieder (7, 8) auch in der Höhe verstellbar ist.

10. Vorrichtung nach Anspruch 9, **dadurch gekennzeichnet, daß** nur eines der Förderglieder in der Höhe verstellbar ist, nämlich das der Scheibenlaufebene (16) nächstliegende Förderglied (7).

11. Vorrichtung nach Anspruch 10, **dadurch gekennzeichnet, daß** zur Höhenverstellung des wenigstens einen Fördergliedes (7, 8) ein elektrischer Stellantrieb (23) vorgesehen ist, welchem ein Sensor (27) zugeordnet ist, welcher messen kann, wie hoch in einer eventuell kommenden Stufenscheibe die Stufe zwischen den beiden Glasscheiben der Isolierglasscheibe ist, so daß der Stellantrieb (23) die Höhenlage des betreffende Fördergliedes (7, 8) um das Maß der gemessenen Stufe ändert.

12. Vorrichtung nach einem der vorstehenden Ansprüche, **dadurch gekennzeichnet, daß** im Bereich der Stützeinrichtung (15) eine synchron mit dem Waagerechtförderer (2) angetriebene Mitnahmevorrichtung (30) angeordnet ist, welche durch Ansaugen einen Kraftschluß zur Isolierglasscheibe herstellen kann.

13. Verfahren zum Ausrichten der Förderglieder (7,8) in einer Vorrichtung gemäß einem der vorstehenden Ansprüche, **dadurch gekennzeichnet, daß** die Auflageflächen (10, 11) mit ihren einander zugewandten Rändern bündig liegen mit den beiden inneren, unteren Glaskanten (28, 29) der jeweiligen Isolierglasscheibe.

## Claims

1. A device for conveying insulating glass panes, which have an edge gap (38) between two glass sheets (12, 13), slightly inclined from the perpendicular with a horizontal conveyor (2) on which the glass sheets can stand,
and with a supporting device (15) extending above and parallel to the horizontal conveyor (2) and defining a pane movement plane (16) by one or a plurality of supporting elements against which can rest the insulating glass panes standing on the horizontal conveyor (2),
in which the horizontal conveyor (2) has supporting surfaces (10, 11) provided at two parallel and synchronously drivable conveying elements (7, 8), the supporting surfaces (10, 11) being aligned substantially vertical to the pane movement plane (16), and the distance between the conveying elements (7, 8) being variable by means of positioning motors (21, 22),
**characterized in that** both conveying elements (7, 8) are movable independently of one another transversely to the pane movement plane (16),
that electric positioning motors (21, 22) are provided for movement of the conveying elements (7, 8), to which motors sensors (25, 26) are assigned that are able to measure the thickness of the glass sheet (12) running in the pane movement plane (16) and the distance between the two glass sheets (12, 13) in the insulating glass pane such that the positioning motors (22, 22) adjust the conveying elements in accordance with the measurement values obtained, such that the width and position of the gap between the supporting surfaces (10, 11) are closely adapted to the width and position of the edge gap (38) and the supporting surfaces (10, 11) leave the edge gap (18) blank.

2. Device according to Claim 1, **characterized in that** the supporting surfaces (10, 11) extend in the horizontal conveying direction.

3. Device according to Claim 2, **characterized in that** the conveying elements (7, 8) are belts whose upper part is supported by a carrier (3, 4).

4. Device according to Claim 3, **characterized in that** the carrier (3, 4) has an upper side aligned horizontally and substantially at right angles to the pane movement plane (16), the upper part of the belt (7, 8) sliding on the upper side of the carrier (3, 4).

5. Device according to Claim 4, **characterized in that** the carrier (3, 4) has guide means that guide the belts (7, 8) in the conveying direction.

6. Device according to Claim 5, **characterized in that** the guide means are formed by a groove (5, 6) in the upper side of the carrier (3, 4).

7. Device according to Claim 3, **characterized in that** the carrier has a closely packed series of rollers arranged with parallel axes and at identical height, which support the upper part of the belt.

8. Device according to any of Claims 3 to 7, **characterized in that** the belts (7, 8) are toothed belts.

9. Device according to any of the preceding claims, **characterized in that** at least one of the conveying elements (7, 8) is also height-adjustable.

10. Device according to Claim 9, **characterized in that** only one of the conveying elements is height-adjustable, i.e. the conveying element (7) closest to the pane movement plane (16).

11. Device according to claim 10, **characterized in that** an electric positioning drive (23) is provided for height adjustment of the at least one conveying element (7, 8), to which drive a sensor (27) is assigned that is able to measure how high the step between the two glass sheets of the insulating glass pane is in an eventually arriving stepped pane, such that the positioning drive (23) changes the height position of the appropriate conveying element (7, 8) by the dimension of the step measured.

12. Device according to any of the preceding claims, **characterized in that** in the area of the supporting device (15) a driver device (30) is arranged that is driven synchronously with the horizontal conveyor (2) and is able to create a non-positive connection to the insulating glass pane by sucking.

13. A method for aligning the conveying elements (7, 8) in a device according to any of the preceding claims, **characterized in that** mutually facing edges of the supporting surfaces (10, 11) are positioned flush with the two inner and lower glass edges (28, 29) of the respective insulating glass pane.

## Revendications

1. Dispositif pour le transport de vitres isolantes qui possèdent un joint marginal (38) entre deux vitres isolantes (12, 13) légèrement inclinées par rapport à la verticale, comprenant un transporteur horizontal (2) sur lequel on peut dresser les vitres isolantes et un mécanisme de support (15), qui s'étend au-dessus du transporteur horizontal (2), parallèlement à ce dernier, et qui définit un plan de passage (16) pour les vitres à l'aide d'un ou de plusieurs éléments de support contre lesquels peuvent s'appuyer les vitres isolantes dressées sur le transporteur horizontal (2), dans lequel le transporteur horizontal (2) possède des surfaces d'appui (10, 11) sur deux éléments de transport (7, 8) réciproquement parallèles et aptes à être entraînés de manière synchrone, lesdites surfaces étant orientées essentiellement perpendiculairement au plan de passage (16) pour les vitres, la distance séparant les éléments de transport (7, 8) pouvant être modifiée via des moteurs de réglage (21, 22), **caractérisé en ce que** les deux éléments de transport (7, 8) sont à même de se déplacer de manière réciproquement indépendante en position transversale par rapport au plan de passage (16) pour les vitres, **en ce qu'**on prévoit, pour le déplacement des éléments de transport (7, 8) des moteurs de réglage électriques (21, 22) auxquels sont attribués des capteurs (25, 26) qui peuvent mesurer l'épaisseur de la vitre (12) qui passe dans le plan de passage (16) pour les vitres, ainsi que l'écartement des deux pans de verre (12, 13) dans la vitre isolante, de telle sorte que les moteurs de réglage (21, 22) déplacent les éléments de transport en fonction des valeurs de mesure obtenues de telle sorte que la largeur et la position de l'espace libre entre les surfaces d'appui (10, 11) sont adaptées à la largeur et à la position du joint marginal (38) et de telle sorte que les surfaces d'appui (10, 11) laissent le joint marginal (38) libre.

2. Dispositif selon la revendication 1, **caractérisé en ce que** les surfaces d'appui (10, 11) s'étendent dans le dispositif de transport horizontal.

3. Dispositif selon la revendication 2, **caractérisé en ce que** le éléments de transport (7, 8) sont des courroies dont le brin supérieur est supporté par un dispositif de support (3, 4).

4. Dispositif selon la revendication 3, **caractérisé en ce que** le dispositif de support (3, 4) possède un côté supérieur orienté en direction horizontale et essentiellement perpendiculairement au plan de passage (16) pour les vitres, sur lequel glisse le brin supérieur de la courroie (7, 8).

5. Dispositif selon la revendication 4, **caractérisé en ce que** le dispositif de support (3, 4) possède des moyens de guidage qui guident les courroies (7, 8) dans la direction de transport.

6. Dispositif selon la revendication 5, **caractérisé en ce que** les moyens de guidage sont réalisés sous la forme d'une rainure (5, 6) pratiquée dans le côté supérieur du dispositif de support (3, 4).

7. Dispositif selon la revendication 6, **caractérisé en ce que** le dispositif de support présente une succession dense de galets disposés à la même hauteur et parallèles à l'axe, qui soutiennent le brin supérieur de la courroie.

8. Dispositif selon l'une quelconque des revendications 3 à 7, **caractérisé en ce que** les courroies (7, 8) sont des courroies dentées.

9. Dispositif selon l'une quelconque des revendications précédentes, **caractérisé en ce qu'**au moins un des éléments de transport (7, 8) est également réglable en hauteur.

10. Dispositif selon la revendication 9, **caractérisé en ce que** seulement un des éléments de transport est réglable en hauteur, plus précisément l'élément de transport (7) le plus proche du plan de passage (16) pour les vitres.

11. Dispositif selon la revendication 10, **caractérisé en ce qu'**on prévoit, pour le réglage en hauteur d'au moins un élément de transport (7, 8), un servomoteur électrique (23) auquel est attribué un capteur (27) qui peut mesurer la hauteur du gradin, dans une vitre à gradin qui se présente le cas échéant, entre les deux pans de verre de la vitre isolante, de telle sorte que le servomoteur (23) modifie la position en hauteur de l'élément de transport (7, 8) correspondant en fonction de la valeur du gradin qui a été mesuré.

12. Dispositif selon l'une quelconque des revendications précédentes, **caractérisé en ce que**, dans la zone du mécanisme de support (15), est disposé un dispositif d'entraînement mis en service de manière synchrone avec le transporteur horizontal (2), qui peut exercer, par aspiration, une adhérence par rapport à ladite isolante.

13. Procédé pour la mise en alignement des éléments de transport (7, 8) dans un dispositif selon l'une quelconque des revendications précédentes, **caractérisé en ce que** les surfaces d'appui (10, 11) viennent se disposer, avec leurs bords tournés l'un vers l'autre, à fleur avec les deux arêtes inférieures internes (28, 29) de la vitre isolante respective.
